# EUROPEAN PATENT APPLICATION

(11) **EP 2 105 481 A1**
(43) Date of publication of application: **30.09.2009**
(21) Application number: 07850190.5
(22) Date of filing: 06.12.2007
(51) Int. Cl.: C09D 163/00, C09D 5/00, C09D 7/12

(54) **TWO-PACKAGE TYPE, AIR-DRYING, VIBRATION-DAMPING COATING COMPOSITION**

(30) Priority: 05.01.2007 JP 2007000390
(71) Applicant: Nihon Tokushu Toryo Co., Ltd., Kita-ku Tokyo 114-8584 (JP); Toyota Jidosha Kabushiki Kaisha, Toyota-shi, Aichi 471-8571 (JP)
(72) Inventor: TAKATA, Ayumi, Toyota-shi Aichi 471-8571 (JP); FUNAHASHI, Makoto, Toyota-shi Aichi 471-8571 (JP); KUROYAMA, Yoshinobu, Toyota-shi Aichi 471-8571 (JP); OTOGAWA, Tetsuya, Tokyo 114-8584 (JP); SUZUKI, Hiroshi, Tokyo 114-8584 (JP); DEGUCHI, Kouji, Tokyo 114-8584 (JP)
(74) Representative: Winter, Brandl, Fürniss, Hübner Röss, Kaiser, Polte Partnerschaft Patent- und Rechtsanwaltskanzlei
(86) International application number: PCT/JP2007/073581
(87) International publication number: WO 2008/081680

(57) **Abstract**

[Constitution] A coatings composition having vibration-damping of two-components type and coating type which can be cured at the normal temperature comprising:
a combination of not less than two kinds of an epoxy resins which can be
provided with a curing compounds having each different glass transition temperature and a curing agent for an epoxy resin,
and a filler.

[Effect] The coatings composition having vibration-damping of two-components type and coating type which can be cured at normal temperature can be provided. Specially, said coatings composition which a drying oven for baking such as conventional example is not necessary because its composition can be cured at the normal temperature in a short time can be provided. Said coatings composition which can be exerted excellent vibration-deadening performance at even machine-instrument-apparatus-parts of using at high temperature because it's composition can be exerted high vibration-damping performance at broad range of temperature especially at high temperature can be provided.

## Description

### TECHNICAL FIELD

The present invention relates to the coatings composition having vibration-damping of two-components type and coating type which can be cured at normal temperature.
Specially, the present invention relates to said coatings composition which a drying oven for baking such as conventional examples is not necessary in order that said composition can be cured at normal temperature(room temperature) in a short time, and relates to said coating composition which can be exerted excellent vibration-damping performance at even machine-instrument-apparatus-parts of using at high temperature in order that said composition can be exerted high vibration-damping performance at broad range of temperature especially at high temperature.

### BACKGROUND ART

In International Publication Number WO2003/080746, as coatings composition which can be endowed said vibration-damping performance, it was proposed that baking and drying type aqueous coatings composition having vibration-damping performance comprising:
an aqueous emulsion included the first granular resins having glass transition temperature 0-20°C and gel fraction 60-80% of at least one kind selected from styrene butadiene copolymer, acrylic ester copolymer and
ethylene-vinylacetate copolymer, and
an inorganic filler not less than 200 parts by weight per said first granular resin 100 parts by weight.
However, by using of said aqueous vibration-damping coatings composition, owing to dry this coatings composition at normal temperature, generally, not less than 12 hours is necessary, therefore, ordinarily, the baking-drying process of about 140°C X 20 minutes was necessary, hence, the drying oven for thereof process is necessary, the curing process by this coatings composition was limited under the coating line etc. of an automobiles from that this process was dependent on said baking-drying process by said drying oven.
Also, in a coating film used said baking and drying type aqueous coatings composition having vibration-damping performance, the temperature-area which can be obtained the vibration-damping performance was small, this aqueous coatings composition can not be exerted the vibration-damping performance at broad range of temperature-area.

Patent Document 1:
   International Publication Number WO2003/080746

### DISCLOSURE OF INVENTION

### PROBLEMS TO BE SOLVED BY THE INVENTION

It is therefore an object of the present invention to provide technical skill to eliminate the above-mentioned problems, specially, to provide technical skill which can be cured at normal temperature in a short time, the drying oven for baking such as conventional example is not necessary, also, and high vibration-damping performance can be exerted even in machine-instrument-apparatus-parts of using at high temperature because of exertion of high vibration-damping performance at broad range of temperature especially at high temperature.
The foregoing and other objects and novel features of the present invention will become clear from the following description and the accompanying drawings.

### MEANS FOR SOLVING THE PROBLEMS

The present invention's Claims are as follows.
(Claim 1)A coatings composition having vibration-damping of two-components type and coating type which can be cured at normal temperature comprising:
   a combination of not less than two kinds of an epoxy resins which can be provided with a curing compounds having each different glass transition temperature and a curing agent for an epoxy resin
   and a filler
(Claim 2) The coatings composition as defined in claim 1 wherein said epoxy resins is dimer acid type, phenol novolak type, bisphenol type, denaturated by rubber type, alkyl phenol type, denaturated by alcohol type, resorcine type, poly glycol type or ester type epoxy resin.
(Claim 3) The coatings composition as defined in claim 1 or claim 2 wherein said curing agent for the epoxy resin is polyamine or mercaptane.
(Claim 4) The coatings composition as defined in claim 1, claim 2 or claim 3 wherein a drying time at put one's finger according to rule in JIS (Japanese Industrial Standards) K 5600-1-1 is not more than 80 minutes at not less than 20°C.
(Claim 5) The coatings composition as defined in claim 1, claim 2 claim 3 or claim 4 wherein when said coatings composition was coated on a base plate of 3mm thickness as its coating thickness of after curing become 6mm, its loss-factor η is not less than 0.15 at from 40°C to 80°C and from 100Hz to 10,000Hz.

### EFFECTS OF THE INVENTION

According to the present invention, the coatings composition having vibration-damping of two-components type and coating type which can be cured at normal temperature can be provided.
Specially, according to the present invention, said coatings composition which a drying oven for baking such as conventional example is not necessary because it's composition can be cured at normal temperature in a short time, and which can be exerted excellent vibration-damping performance at even machine-instrument-apparatus-parts of using at high temperature because it's composition can be exerted high vibration-damping performance at broad range of temperature especially at high temperature.

### BEST MODE FOR CARRYING OUT THE INVENTION

The epoxy resin for use in the present invention may be obtained by oneself reaction of a compound (epoxide) having not less than 2 of oxirane ring of three membered ring in 1 molecule or addition-reaction of said epoxide with a curing agent, and may be obtained by polymerization sterically at the same time with a ring-opening reaction.
Said epoxide can be classified glycidyl type and non-glycidyl series.
Said glycidyl type epoxide is an epoxy compound obtained by reaction of epichlorohydrin with phenolic OH, alcoholic OH and carboxyl-radical etc.. As examples of said glycidyl type epoxide, novolak type epoxide, bisphenol type epoxide, alkylphenol type epoxide, resorcine type epoxide, polyglycol type epoxide and ester type epoxide etc. can be shown.
Said novolak type epoxide can be obtained by reaction of an initial condensation compound of novolak type phenol resin with epichlorohydrin. Epoxide named phenol novolak type epoxide may be included as novolak series. Bisphenol type epoxide can be obtained by condensation between bisphenol A and epichlorohydrin.
Alkylphenol type epoxide can be obtained by reaction of epichlorohydrin with phenolic OH, alkylphenoldiglycidylether falls under this category as example.
Resorcine type epoxide can be obtained by reaction of resorcine resin with epichlorohydrin.
Polyglycol type epoxide can be obtained by reaction of ethylene glycol, propylene glycol, glycerin or these polyglycol or the like with epichlorohydrin. Extensively, alcohol type epoxide obtained by reaction of epichlorohydrin with alcoholic OH may be included.
Ester type epoxide is an ester which hydrogen of carboxyl-radical was replaced with glycidyl-radical. For example, dimer acid type epoxy resin of dimer acid glycidyl ester may be included belong this example. Said ester type epoxide may be included methacrylic acid diglycidyl ester and polymer thereof, somewhere else.
Said epoxides can be used denaturated-thereof by a denaturant such as NBR(butadiene-acrylonitrile copolymer rubber), SBR(styrene-butadiene rubber), ETBN(Electrocrystallization of a TTF-based donor-radical), urethane etc.
The non-glycidyl series epoxide can be obtained that unsaturated compound(carbon double bond) being reacted with peracetic acid, and not less than two oxide radical was introduced. As said non-glycidyl series epoxy resin, for example, cyclic aliphatic epoxide used cyclic unsaturated compound; epoxidation butadiene used butadiene; epoxidation glyceride used glyceride of unsaturated compound or the like can be recited. Said epoxide can be used too denaturated epoxide by the above-mentioned denaturant.
As above-mentioned, epoxy resin can be obtained by reaction of epoxide as shown example oneself or the addition-reaction with the curing agent, and by polymerization sterically with the ring-opening reaction.
For example, novolak type epoxide, bisphenol type epoxide, alkylphenol type epoxide, alcohol type epoxide, resorcine type epoxide, polyglycol type epoxide, ester type epoxide etc. become each for example novolak type epoxy resin, bisphenol type epoxy resin, alkylphenol type epoxy resin, alcohol type epoxy resin, resorcine type epoxy resin, polyglycol type epoxy resin, ester type epoxy resin or the like. The dimer acid type epoxide become the dimer acid type epoxy resin belonged to the ester type epoxy resin.
Herein, as said curing agent, epoxy a resin curing agent (the curing agent for the epoxy resin) consists of polyamine or mercaptane such as described later can be recited.

In the present invention, not less than two kinds of the epoxy resins which each epoxy resin has different glass transition temperature (Tg) of the curing compounds mixed with the curing agent should be selected from above-mentioned epoxy resins.
For example, when their examples recite, a combination of dimer acid type epoxy resin (Tg of the curing compounds mixed with the curing agent of above-exemplification is 10°C) and novolak type epoxy resin(Tg of the curing compounds mixed with the curing agent of above-exemplification is 130°C) can be recited.
Said glass transition temperature (Tg) is middle point glass temperature by measuring based on Japanese Industrial Standards (JIS) K 7121 by using of a differential thermal showing calorimeter(DSC).

As the epoxy resin curing agent (the curing agent for the epoxy resin) for use in the present invention, it can be recited acid anhydride, dihydric acid etc.. It is preferable to use polyamine or mercaptane when take into consideration for the combination against above-mentioned epoxy resins.
As example of said polyamine, for example, aliphatic polyamine can be showed. Said aliphatic polyamine is diamine or polyamine having not less than two primary amino radicals in molecular bone structure thereof.
Herein, as illustrative embodiment of aliphatic polyamine,
ethylenediamine,
1,2-propanediamine,
1,3-propanediamine,
1,4-diaminobutane,
hexamethylene-diamine,
2,5-dimetyl-2,5-hexanediamine,
2,2,4-trimethyl hexamethylene-diamine,
diethylenetriamine,
triethylenetetramine,
tetraethylenepentamine,
pentaethylenehexamine,
4-aminomethyloctamethylenediamine,
3,3' -iminobis(propylamine),
3,3' -methyliminobis(propylamine),
bis(3-aminopropyl)ether,
1,2-bis(3-aminopropyloxy)ethane,
MENSENJI amine,
isophoronediamine,
bisaminomethylnorbornene,
bis(4-aminocyclohexyl) methane,
bis(4-amino-3-methylcyclohexyl)methane,
1,3-diaminocyclohexane,
3,9-bis(3-aminopropyl)-2,4,8,10-tetraoxaspiro[5,5]undecane
can be recited.
Said aliphatic polyamine may be included alicyclic amine such as isophoronediamine(IPDA) etc.
Said aliphatic polyamine denaturated for example by the epoxy resins or alkylene oxide compound, or denatured to cyanoethylation or ketimining can be used. In illustrative embodiment, for example,
amine-adduct(polyamine-epoxyresin adduct),
polyamine-ethyleneoxide,
polyamine-propyleneoxideadduct,
denaturated-aliphatic-series-polyamine denaturated by cyanoethylated-polyamine or ketimine(Ketoimine) etc. can be used.
In said aliphatic polyamine, denaturated polyamideamine which a low molecular amines such as above-mentioned was reacted with phthalic anhydride or dimer acid etc. can be used. For example, as said denaturated polyamideamine, generally, a products which dimer acid (dimer fatty acid) obtained by thermal polymerization of refined vegetable fatty acid picked from drying oil, semi-drying oil and tall oil or the like was reacted with aliphatic polyamine can be recited.
Said aliphatic polyamine should be combined by necessity with not less than two kinds of above-mentioned epoxy resins which can be provided with curing compounds having each different glass transition temperature (Tg).
As the curing agent may be combined together said epoxy resins which can be provided with curing compounds having each different glass transition temperature(Tg), it can be used mercaptane, but said mercaptane has the problem of odor, hence, it is preferable to use polyamine.

The used amount of the epoxy resin curing agent in the present invention is preferably that active hydrogen radical in epoxy resin curing agent become amount to 0.7-1.5 equivalent per 1 equivalent of epoxy radical of used the epoxy resin, because the curing can be proceeded smoothly and the excellent curing property can be obtained.

As the filler for use in the present invention, calcium carbonate, barium sulfate, magnesium hydroxide, mica, talc, kaolin, clay, silicic acid, zeolite, diatomaceous earth, silica sand etc. can be recited.
Various types of organic/inorganic coloring pigment included titanium oxide and carbon black: fibrous filler such as carbon fiber and cotton flock or the like: hollow pigment: and plastics filler etc. can be too used.

It is desirable that the blend amount of said filler in the present invention is not less than 100 parts by weight per a resin-portion 100 parts by weight, preferably from 100 to 500 parts by weight, because of the intended object of the present invention that can be cured in short time at normal temperature, and can be exerted high vibration-damping performance at broad range of temperature even at high temperature.

In the coatings composition which can be cured at normal temperature of the present invention, if necessary, an antifoaming agent, a dispersing agent, a thickener, a coating run stopping agent etc. can be added.

The coatings composition which can be cured at normal temperature of the present invention has favorable curing performance, therefore, it has no need to use a curing-forwarding agent, but said curing-forwarding agent may be used due to improve working performance by more raising of reaction speed.
As said curing-forwarding agent can be used many different kinds thereof, for example, phosphorous series compound, tertiary amine, imidazole, organic acid metal salt, lewis acid, amine complex salt etc. can be recited, it is not only one kind thereof, but also two or more kinds thereof can be used.

The coating by the coatings composition which can be cured at normal temperature of the present invention can be carried out by various coating methods such as spray gun of air-sprayed coating, airless coating, roller, brush coating, pallet, trowel etc. for example.

The coating film used the coatings composition which can be cured at normal temperature of the present invention is characterized by that drying time at put one's finger according to rule in Japanese Industrial Standards (JIS) K 5600-1-1 is not more than 80 minutes at not less than 20°C.
A coating film coated on a coating-material substance can be cured for about 80 minutes at normal temperature(20°C), but it is influenced by the coating thickness thereof.
As described later, the coating film used the coatings composition having vibration-damping of two-components type and coating type which can be cured at normal temperature of the present invention is characterized by that the loss-factor η was shown not less than 0.1 at measured temperature 20°C-100°C and the loss-factor η was shown not less than 0.15 at measured temperature 40°C-80°C, when said coatings composition was coated on one side of the base plate(an aluminum base plate) of 3mm thickness as its coating thickness of after curing become 6mm, and the loss-factor η showed the vibration-damping performance of above-manufactured test piece was measured in accordance with "Test methods for vibration-damping property in laminated damping steel sheets of constrained type" prescribed in JIS G 0602, and in accordance with "The center add-vibration half-value breadth methods" (2000Hz conversion) at measured temperature 20°C-100°C.

According to the present invention, there are provided technical skill that can be cured at normal temperature in a short time, and can be exerted the vibration-damping performance, under the condition that the drying oven for baking such as conventional example has no need.

### EXAMPLES

For better understanding of the present invention, examples will be described below. Needless to say, the present invention is not limited by the following examples.

### EXAMPLE 1

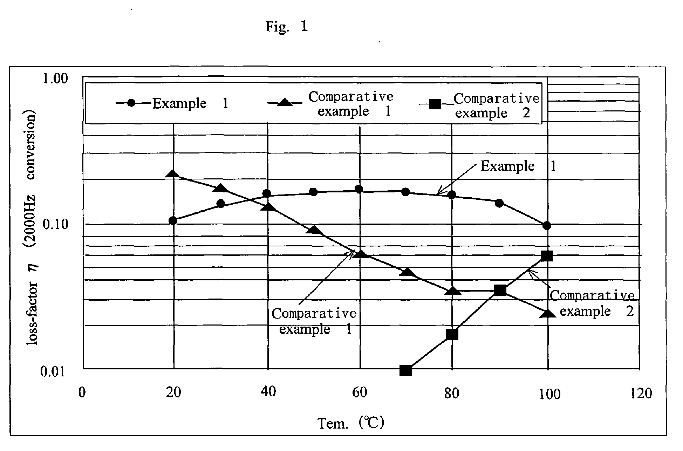

In accordance with Table 1, the coatings composition which can be cured at normal temperature comprising the epoxy resins of basis, the curing agent (polyamine) and the filler was prepared.
Said epoxy resins are composed two kinds of dimer acid type epoxy resin (Tg≒10°C, epoxy equivalent : 390 ∼ 470) and novolak type epoxy resin (Tg≒130°C, epoxy equivalent:172∼178).
Above-mentioned coatings composition was carried out mixing and dispersion by high speed stirring device, after then was carried out defoaming and stirring, the product was supplied to the coatings for coating.
Said coatings was coated on one side of the aluminum base plate of 3mm thickness, as its coating thickness of after curing become 6mm.
The loss-factor η shown the vibration-damping performance of above-manufactured test piece was measured, in accordance with "Test methods for vibration-damping property in laminated damping steel sheets of constrained type" prescribed in JIS G 0602, by "The center add-vibration half-value breadth methods" (2000Hz conversion) at from 20°C to 100°C. In addition, it is judged that the more the value of the loss-factor η was large, the more the vibration-damping performance is high, and it has the vibration-damping performance when if they are 0.05 or more values.
The measured results are shown in Figure 1.

### EXAMPLE 2

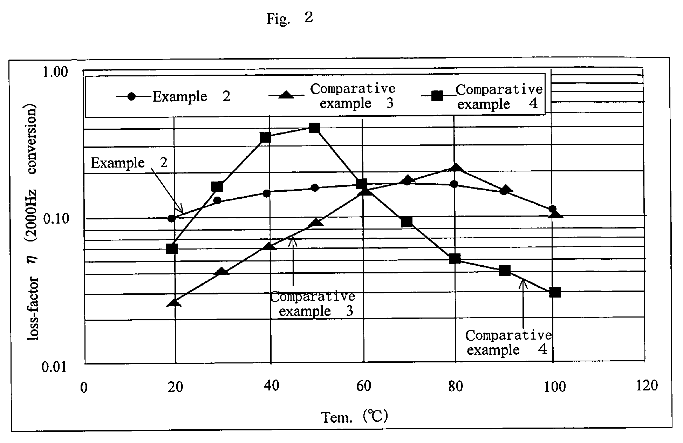

In accordance with Table 1, except for the epoxy resins of basis are replaced, in accordance with the same way as shown in Example 1, the coatings composition which can be cured at normal temperature comprising epoxy resins of basis, the curing agent and the filler was prepared.
In accordance with the same way as shown in Example 1, the loss-factor η shown the vibration-damping performance was measured.
The measured results are shown in Figure 2.

### EXAMPLE 3

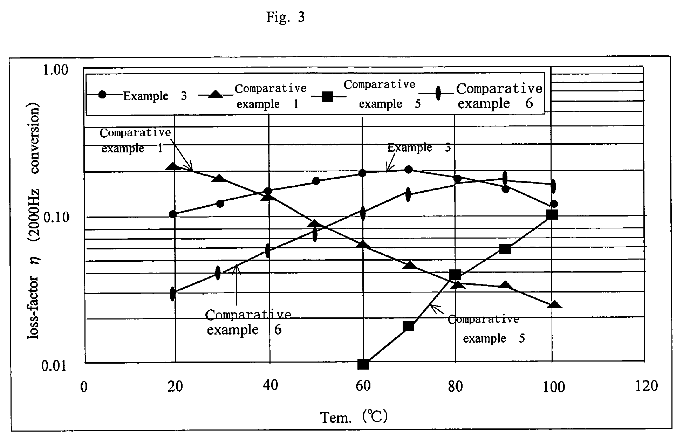

In accordance with Table 1, except for the epoxy resins of basis are replaced, in accordance with the same way as shown in Example 1, the coatings composition which can be cured at normal temperature comprising the epoxy resins of basis, the curing agent and the filler was prepared.
In accordance with the same way as shown in Example 1, the loss-factor η shown the vibration-damping performance was measured.
The measured results are shown in Figure 3.

### EXAMPLE 4

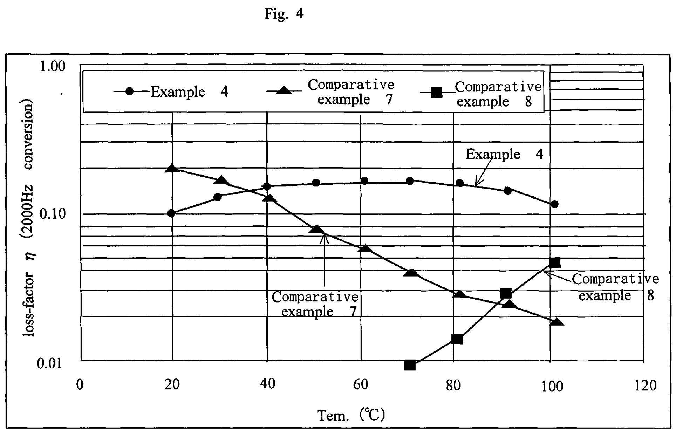

In accordance with Table 1, except for the polyamine of the curing agent was replaced with the mercaptane, in accordance with the same way as shown in Example 1, the coatings composition which can be cured at normal temperature comprising the epoxy resins of basis, the curing agent and the filler was prepared.
In accordance with the same way as shown in Example 1, the loss-factor η shown the vibration-damping performance was measured.
The measured results are shown in Figure 4.

### EXAMPLE 5

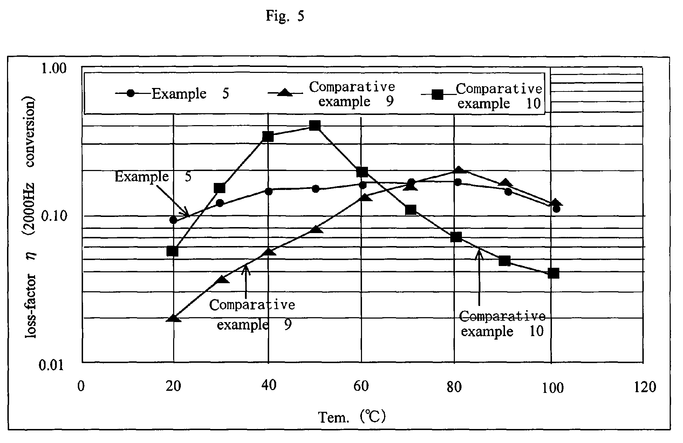

In accordance with Table 1, except for the polyamine of the curing agent was replaced with the mercaptane, in accordance with the same way as shown in Example 2, the coatings composition which can be cured at normal temperature comprising the epoxy resins of basis, the curing agent and the filler was prepared.
In accordance with the same way as shown in Example 1, the loss-factor η shown the vibration-damping performance was measured.
The measured results are shown in Figure 5.

### EXAMPLE 6

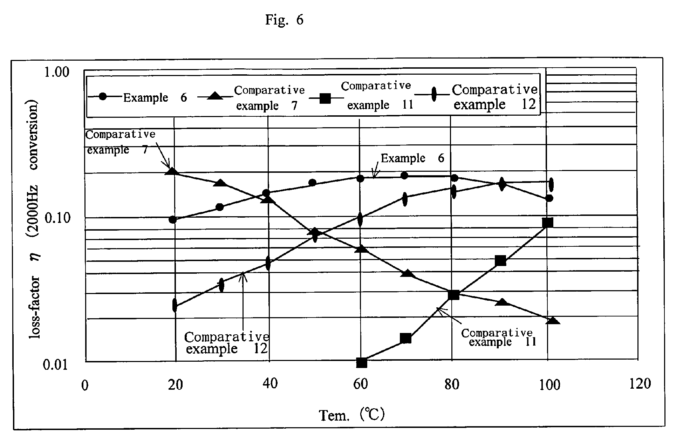

In accordance with Table 1, except for the polyamine was replaced with the mercaptane, in the same way as shown in Example 3, the coatings composition which can be cured at normal temperature comprising epoxy resins of basis, the curing agent and the filler was prepared.
In the same way as shown in Example 1, the loss-factor η shown the vibration-damping performance was measured.
The measured results are shown in Figure 6.

### COMPARATIVE EXAMPLE 1

In accordance with Table 1, except for the epoxy resins of basis are replaced, in accordance with the same way as shown in Example 1, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 1 and Figure 3.

### COMPARATIVE EXAMPLE 2

In accordance with Table 1, except for the epoxy resins of basis are replaced, in accordance with the same way as shown in Example 1, the coatings composition which can be cured at normal temperature comprising the epoxy resin of basis, the curing agent and the filler was prepared. In accordance with the same way as shown in Example 1, the loss-factor η shown the vibration-damping performance was measured.
The measured results are shown in Figure 1.

### COMPARATIVE EXAMPLE 3

In accordance with Table 2, except for the epoxy resins of basis was replaced, in the same way as shown in Example 2, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 2.

### COMPARATIVE EXAMPLE 4

In accordance with Table 1, except for the epoxy resins of basis was replaced, in accordance with the same way as shown in Example 2, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 2.

### COMPARATIVE EXAMPLE 5

In accordance with Table 1, except for the epoxy resins of basis was replaced, in accordance with the same way as shown in Example 3, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 3.

### COMPARATIVE EXAMPLE 6

In accordance with Table 1, except for the epoxy resins of basis was replaced, in accordance with the same way as shown in Example 3, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 3.

### COMPARATIVE EXAMPLE 7

In accordance with Table 1, except for the polyamine of the curing agent was replaced with the mercaptane, in accordance with the same way as shown in Comparative Example 1, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 4.

### COMPARATIVE EXAMPLE 8

In accordance with Table 1, except for the polyamine of the curing agents was replaced with the mercaptane, in accordance with the same way as shown in Comparative Example 2, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 4.

### COMPARATIVE EXAMPLE 9

In accordance with Table 1, except for the polyamine of the curing agents was replaced with the mercaptane, in accordance with the same way as shown in Example 2, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 5.

### COMPARATIVE EXAMPLE 10

In accordance with Table 1, except for the polyamine of the curing agents was replaced with the mercaptane, in accordance with the same way as shown in Example 2, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 5.

### COMPARATIVE EXAMPLE 11

In accordance with Table 1, except for the polyamine of the curing agent was replaced with the mercaptane, in accordance with the same way as shown in Comparative Example 5, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 6.

### COMPARATIVE EXAMPLE 12

In accordance with Table 1, except for the polyamine of the curing agent was replaced with the mercaptane, in accordance with the same way as shown in Compararative Example 6, the coatings composition which can be cured at normal temperature comprising the epoxy resin of basis, the curing agent and the filler was prepared.
In accordance with the same way as shown in Example 1, the loss-factor η shown the vibration-damping performance was measured.
The measured results are shown in Figure 6.
In Table 1, the glass transition temperature(°C) of the coating film after curing was showed too.

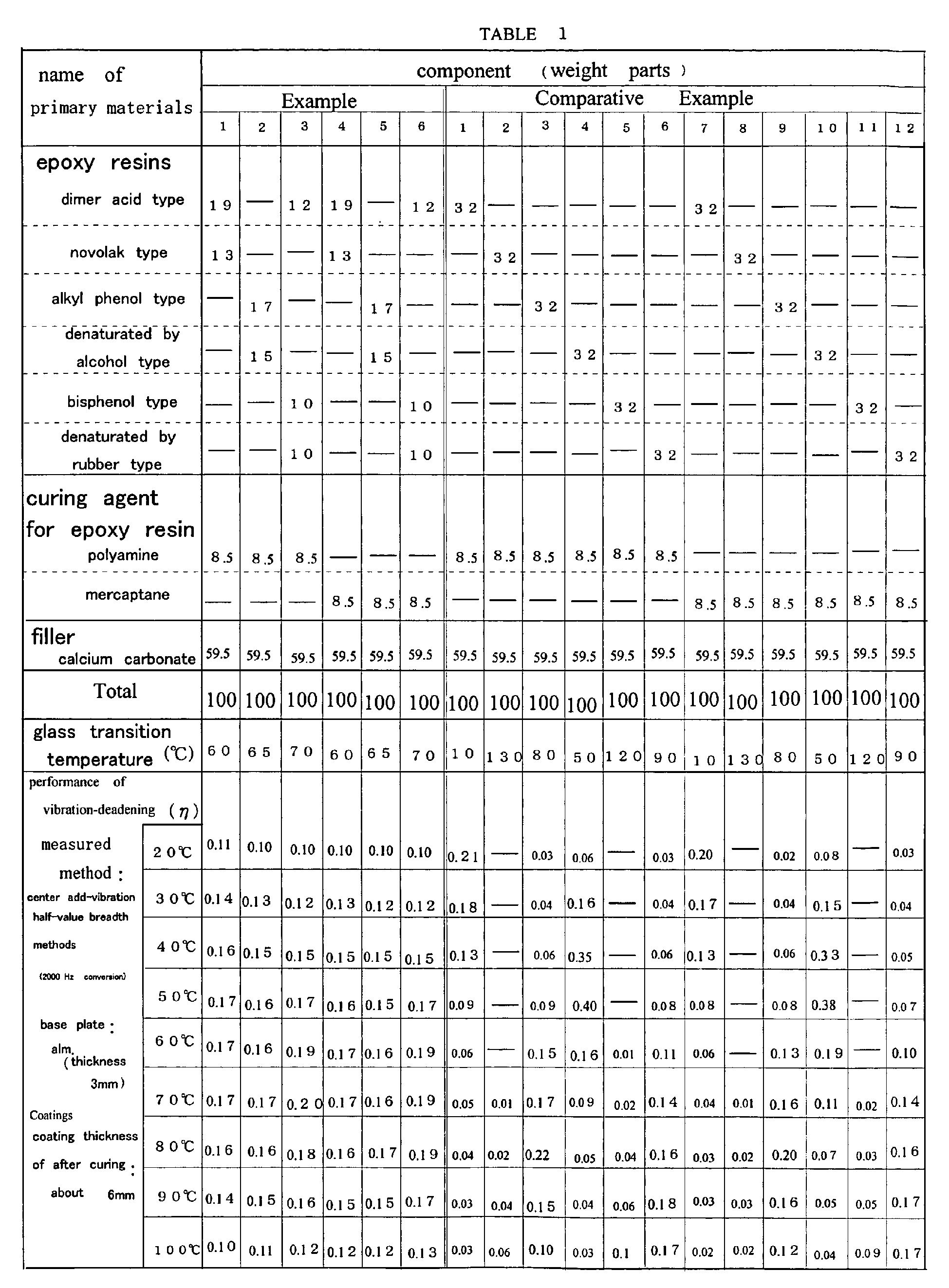

### RESULTS

From Figures 1-6, according to the coatings composition by examples in the present invention, the loss-factor η thereof was shown not less than 0.1 at each 20°C-100°C measured temperature, particularly, the loss-factor η thereof was shown not less than 0.15 at range of 40°C-80°C measured temperature, it can be understood that this coatings composition can be exerted high performance of vibration-damping at broad range of temperature of from low temperature till high temperature, especially, this coatings composition can be exerted high vibration-damping performance even though at measurement-point of high temperature such as 80°C-100°C, and can be exerted excellent vibration-damping performance even machine-instrument-apparatus-parts such as automobile of using at high temperature.
On the other hand, in comparative example, it can be understood that the loss-factor η was depended heavily on the temperature as compared with the present invention.

The epoxy resins having different glass transition temperature in the present invention may be applied 3 kinds thereof in case of 2 kinds and more, for example.

### INDUSTRIAL APPLICABILITY

The present invention is in applicable to the all of vehicles besides automobiles.
In addition the other use of vehicles such as an automobiles etc., the present invention can be used in wide use.

### BRIEF DESCRIPTION OF THE DRAWINGS

[Figure 1] This Figure is graphic figure shown function-advantage in the embodiment of the present invention (and Comparative Example ).
[Figure 2] This Figure is graphic figure shown function-advantage in the embodiment of the present invention (and Comparative Example ).
[Figure 3] This Figure is graphic figure shown function-advantage in the embodiment of the present invention (and Comparative Example ).
[Figure 4] This Figure is graphic figure shown function-advantage in the embodiment of the present invention (and Comparative Example ).
[Figure 5] This Figure is graphic figure shown function-advantage in the embodiment of the present invention (and Comparative Example ).
[Figure 6] This Figure is graphic figure shown function-advantage in the embodiment of the present invention (and Comparative Example ).

## Claims

1. A coatings composition having vibration-damping of two-components type and coating type which can be cured at normal temperature comprising:
a combination of not less than two kinds of an epoxy resins which can be provided with a curing compounds having each different glass transition temperature and a curing agent for an epoxy resin
and a filler.

2. The coatings composition as defined in claim 1 wherein said epoxy resins is dimer acid type, phenol novolak type, bisphenol type, denaturated by rubber type, alkyl phenol type, denaturated by alcohol type, resorcine type, poly glycol type or ester type epoxy resin.

3. The coatings composition as defined in claim 1 or claim 2 wherein said curing agent for the epoxy resin is polyamine or mercaptane.

4. The coatings composition as defined in claim 1, claim 2 or claim 3 wherein a drying time at put one's finger according to rule in JIS (Japanese Industrial Standards) K 5600-1-1 is not more than 80 minutes at not less than 20°C.

5. The coatings composition as defined in claim 1, claim 2 claim 3 or claim 4 wherein when said coatings composition was coated on a base plate of 3mm thickness as its coating thickness of after curing become 6mm, its loss-factor η is not less than 0.15 at from 40°C to 80°C and from 100Hz to 10,000Hz.
